(19) Europäisches Patentamt

European Patent Office

Office européen des brevets

(11) **EP 4 738 644 A1**

(12) **EUROPEAN PATENT APPLICATION**

(43) Date of publication:
**06.05.2026 Bulletin 2026/19**

(21) Application number: **25207253.3**

(22) Date of filing: **07.10.2025**

(51) International Patent Classification (IPC):
**H02J 7/54** *(2026.01)*      **B60L 58/22** *(2019.01)*
**H02J 7/61** *(2026.01)*      **H02J 7/64** *(2026.01)*

(52) Cooperative Patent Classification (CPC):
**B60L 58/22; H01M 10/482; H02J 7/54;**
H01M 2010/4271; H02J 7/61; H02J 7/64

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.10.2024 JP 2024189853
25.03.2025 JP 2025050153**

(71) Applicant: **ABLIC Inc.
Kitasaku-gun, Nagano 389-0293 (JP)**

(72) Inventor: **MIYAMOTO, Yasuhiro
Kitasaku-gun, Nagano, 389-0293 (JP)**

(74) Representative: **Winter, Brandl - Partnerschaft
mbB
Alois-Steinecker-Straße 22
85354 Freising (DE)**

(54) **CELL BALANCING CIRCUIT AND BATTERY DEVICE**

(57) A cell balancing circuit (100, 200, 300, 400, 500) controls cell balancing between a first battery cell (11) that generates a first cell voltage (V1) and a second battery cell (12) which is connected in series with the first battery cell and generates a second cell voltage (V2). The cell balancing circuit includes: a first voltage divider circuit (103) that outputs a first voltage divider voltage (Vdl) as an average voltage of the first battery cell and the second battery cell; a first differential voltage-to-current converter (101) that discharges from the first battery cell a first cell balancing current (Ibl) generated according to a voltage difference obtained by subtracting the second cell voltage from the first voltage divider voltage; and a second differential voltage-to-current converter (102) that discharges from the second battery cell a second cell balancing current (Ib2) generated according to the voltage difference with polarity reversed.

FIG. 1

**EP 4 738 644 A1**

**Description**

BACKGROUND

Technical Field

The present invention relates to a cell balancing circuit and a battery device.

Related Art

There is a battery pack in which multiple battery cells of rechargeable secondary batteries are connected in series. Each cell voltage of the multiple battery cells in the battery pack is not the same due to, for example, manufacturing variation of the battery cells, variation in self-leakage current of the battery cells, and the like. Also, each cell voltage may differ according to ambient temperature. Furthermore, in response to degradation progressing in this battery pack through repeated charge-discharge cycles, the degradation state (SOH: State of Health) becomes different for each battery cell, and deviation occurs in the cell voltage of each battery cell. As degradation progresses, the cell voltage of the battery cells becomes higher during charging but becomes lower during discharging.

In the case that each cell voltage of each battery cell differs greatly, in response to a charge-discharge control circuit being respectively connected to each battery cell, a battery cell with high cell voltage immediately becomes overcharged and charge stops during charging, and a battery cell with low cell voltage immediately becomes over-discharged and discharge stops during discharging. For this reason, efficient charge-discharge may not be performed.

Various proposals have been made to regulate the balance of cell voltage of each battery cell in such a battery pack.

For example, a battery pack control device has been proposed that respectively measures the cell voltage of each battery cell with an ADC (Analog to Digital Converter), performs calculations with a signal processing circuit such as an MPU (Micro Processing Unit), and equalizes the cell voltage of each battery cell (see Patent Document 1).

Also, a voltage regulation device for a battery pack has been proposed that uses a comparator to selectively discharge battery cells higher than the average voltage of the battery pack, and finally equalizes the cell voltage of all battery cells (see Patent Document 2).

Furthermore, a voltage balance correction circuit has been proposed that forms a negative feedback loop with a comparator to make the potential difference between the average voltage of two adjacent battery cells and the intermediate voltage of the two battery cells zero, and discharges the battery cell with high cell voltage in response to a voltage difference occurring (see Patent Document 3).

Citation List

Patent Document

[Patent Document 1] International Publication No. WO 2015/029283
[Patent Document 2] Japanese Patent Application Laid-Open Publication No. 2000-83327
[Patent Document 3] Japanese Patent Application Laid-Open Publication No. 2010-63264

SUMMARY

Technical Problem

In one aspect of the present invention, an object is to provide a cell balancing circuit capable of performing cell balancing operation by current control for each battery cell connected in series.

Solution to Problem

The present invention provides a cell balancing circuit in one embodiment for controlling cell balancing between a first battery cell that generates a first cell voltage and a second battery cell which is connected in series with the first battery cell and generates a second cell voltage. The cell balancing circuit includes: a first voltage divider circuit that outputs a first voltage divider voltage as an average voltage of the first battery cell and the second battery cell; a first differential voltage-to-current converter that discharges from the first battery cell a first cell balancing current generated according to a voltage difference obtained by subtracting the second cell voltage from the first voltage divider voltage; and a second differential voltage-to-current converter that discharges from the second battery cell a second cell balancing current generated according to the voltage difference with polarity reversed.

Effects

According to one aspect of the present invention, it is possible to provide a cell balancing circuit capable of performing cell balancing operation by current control for each battery cell connected in series.

BRIEF DESCRIPTION OF THE DRAWINGS

FIG. 1 is a circuit diagram illustrating a battery device (during discharging) using a cell balancing circuit according to a first embodiment of the present invention.
FIG. 2 is a graph illustrating cell balancing current-voltage difference characteristics of a differential voltage-to-current converter according to the first embodiment of the present invention.
FIG. 3 is a graph illustrating cell balancing current-voltage difference characteristics of the differential voltage-to-current converter according to the first embodiment of the present invention.
FIG. 4 is a graph illustrating cell balancing current-voltage difference characteristics of the differential voltage-to-current converter according to the first embodiment of the present invention.
FIG. 5 is a circuit diagram illustrating a battery device (during charging) using a cell balancing circuit according to the first embodiment of the present invention.
FIG. 6 is a circuit diagram illustrating a battery device (during open circuit) using a cell balancing circuit according to the first embodiment of the present invention.
FIG. 7 is a circuit diagram illustrating a battery device (during discharging) using a cell balancing circuit according to a second embodiment of the present invention.
FIG. 8 is a circuit diagram illustrating a battery device (during charging) using a cell balancing circuit according to the second embodiment of the present invention.
FIG. 9 is a circuit diagram illustrating a battery device (during open circuit) using a cell balancing circuit according to the second embodiment of the present invention.
FIG. 10 is a circuit diagram illustrating a battery device (during discharging) using a cell balancing circuit according to a third embodiment of the present invention.
FIG. 11 is a circuit diagram illustrating a battery device (during charging) using a cell balancing circuit according to the third embodiment of the present invention.
FIG. 12 is a circuit diagram illustrating a battery device (during open circuit) using a cell balancing circuit according to the third embodiment of the present invention.
FIG. 13 is a circuit diagram illustrating a battery device (during discharging) using a cell balancing circuit according to a fourth embodiment of the present invention.
FIG. 14 is a circuit diagram illustrating a battery device (during charging) using a cell balancing circuit according to a fifth embodiment of the present invention.
FIG. 15 is a schematic diagram illustrating an example of a battery device using multiple cell balancing circuits of FIG. 14.
FIG. 16 is a schematic diagram illustrating another example of a battery device using multiple cell balancing circuits of FIG. 14.

DESCRIPTION OF THE EMBODIMENTS

The present invention is based on the knowledge that in the battery pack control device as described in Patent Document 1, communication between ADC and MPU and computation by the MPU are required, so the device must be activated constantly or periodically, resulting in large consumption current. Moreover, in the method of discharging cell balancing current determined by external resistance values through switch operation as in this battery pack control device, a sequence for switching between even cells and odd cells is required for cell balancing operation, and adjacent battery cells cannot be controlled simultaneously, so efficiency may be reduced. Furthermore, in order to obtain sufficient voltage balance effect in cell balancing operation only during charging or startup, cell balancing current on the order of 100mA is required, and the scale of the circuit for discharging such large current becomes large.
Moreover, the present invention is based on the knowledge that in voltage regulation devices and voltage balance correction circuits as described in Patent Documents 2 and 3, unnecessary cell balancing current may be discharged unless high-precision comparators with small offset errors are used. Furthermore, in the case of constantly using comparators to perform cell balancing operation during load driving, the cell balancing operation intended to bring degraded battery cells closer to the battery capacity of healthy battery cells results in bringing healthy cells closer to degraded cells, which may reduce the battery capacity of healthy battery cells.

Thus, the cell balancing circuit according to one embodiment of the present invention has two differential voltage-to-current converters for two battery cells. The first differential voltage-to-current converter discharges from the first battery cell a first cell balancing current generated according to a voltage difference obtained by subtracting a second cell voltage from a first voltage divider voltage which is an average cell voltage of the two battery cells. The second differential voltage-to-current converter discharges from the second battery cell a second cell balancing current generated according to the voltage difference with polarity reversed.

Accordingly, the cell balancing circuit according to one embodiment of the present invention may discharge cell balancing current through current control corresponding to the voltage difference, and thus is capable of performing cell balancing operation for equalizing cell voltages.

Hereinafter, modes for carrying out the present invention will be described in detail with reference to the drawings.

In the drawings, the same reference numerals are assigned to the same components, and duplicate descriptions may be omitted.

(First Embodiment)

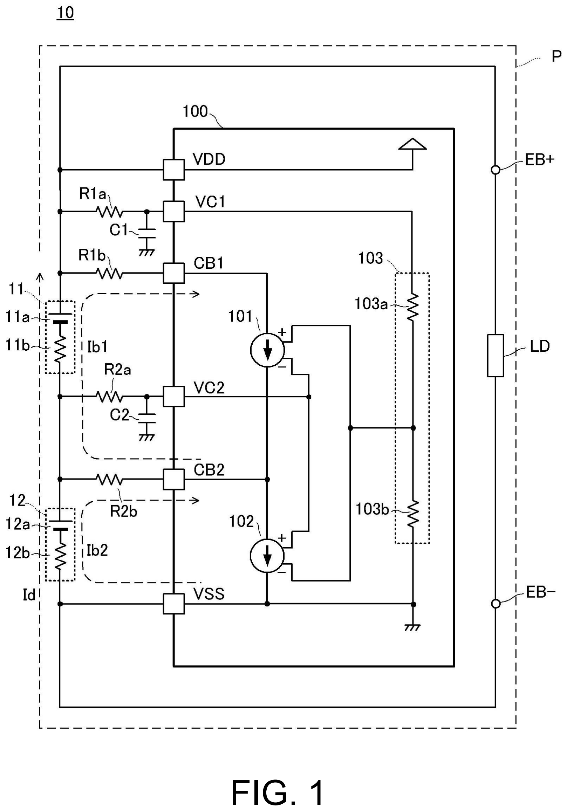

FIG. 1 is a circuit diagram illustrating a battery device (during discharging) using a cell balancing circuit according to a first embodiment of the present invention.

As illustrated in FIG. 1, a battery device 10 includes a battery cell 11, a battery cell 12, and a cell balancing circuit 100. The battery cells 11 and 12 are connected in series as a battery pack. The battery device 10 further includes an external positive terminal EB+ and an external negative terminal EB-, and a load LD is connected between the external positive terminal EB+ and the external negative terminal EB- during discharging.

In the battery device 10 during discharging, the battery cells 11 and 12 discharge to the load LD and drive the load LD. A discharge current Id flows through a main current path P to which the battery cells 11, 12, and the load LD are connected.

The battery cell 11 is a lithium-ion battery. This battery cell 11 generates a cell voltage V1 depending on the charge-discharge state and the degradation state. The battery cell 11 is formed by a battery 11a and an internal resistance 11b.

The battery 11a generates a predetermined open circuit voltage depending on the charge-discharge state. The internal resistance 11b includes solution resistance, charge transfer resistance, active material bulk resistance, contact resistance, and the like, and the resistance value increases as degradation progresses.

The charge voltage of the battery cell 11 may be expressed as the following equation (1).

$$\text{Charge voltage} = \text{Open circuit voltage} + \text{Resistance value of internal resistance 11b} \times \text{Charge current (1)} \qquad (1)$$

The discharge voltage of the battery cell 11 may be expressed as the following equation (2).

$$\text{Discharge voltage} = \text{Open circuit voltage} - \text{Resistance value of internal resistance 11b} \times \text{Discharge current (2)} \qquad (2)$$

From equations (1) and (2), the cell voltage V1 of the battery cell 11 becomes higher during charging but becomes lower during discharging as degradation progresses.

The battery cell 11 may be referred to as a "first battery cell", and the cell voltage V1 may be referred to as a "first cell voltage".

The battery cell 12 is a lithium-ion battery, similar to the battery cell 11. This battery cell 12 generates a cell voltage V2 depending on the charge-discharge state and degradation state. The battery cell 12 is formed by a battery 12a and an internal resistance 12b.

The battery 12a generates a predetermined open circuit voltage depending on the charge-discharge state. The internal resistance 12b, similar to the internal resistance 11b, has a resistance value that increases as degradation progresses.

The charge voltage of the battery cell 12 may be expressed as the following equation (3).

$$\text{Charge voltage} = \text{Open circuit voltage} + \text{Resistance value of internal resistance 12b} \times \text{Charge current (3)} \qquad (3)$$

The discharge voltage of the battery cell 12 may be expressed as the following equation (4).

Discharge voltage = Open circuit voltage - Resistance value of internal resistance 12b × Discharge current (4)     (4)

From equations (3) and (4), the cell voltage V2 of the battery cell 12 becomes higher during charging but becomes lower during discharging as degradation progresses.

The battery cell 12 may be referred to as a "second battery cell", and the cell voltage V2 may be referred to as a "second cell voltage".

Thus, in the case of the degradation progress of the battery cell 11 and the battery cell 12 differs, the resistance values of the internal resistances differ, and a voltage difference may occur between the cell voltage V1 and the cell voltage V2. In the case of this voltage difference becomes large, in the case that the charge-discharge control circuits are respectively connected to each battery cell, in response to the battery pack of the battery cells 11 and 12 is charged, the charge-discharge control circuit determines that the degraded battery cell with high cell voltage is overcharged. Then, charging stops in a state where charging of the battery cell with low cell voltage is insufficient. Also, in response to the battery pack being discharged, the charge-discharge control circuit determines that the degraded battery cell with low cell voltage is over-discharged. Then, discharging stops in a state where discharging of the battery cell with high cell voltage is insufficient. For this reason, there is a possibility that efficient charge-discharge cannot be performed.

Thus, the cell balancing circuit 100 compares the average voltage of the cell voltage V1 and the cell voltage V2 with the cell voltage V2, and discharges cell balancing current from the battery cell 11 or the battery cell 12 according to the voltage difference.

Thereby, the cell balancing circuit 100 is capable of performing cell balancing operation by current control for each battery cell during charging, during discharging, and during open circuit.

The cell balancing circuit 100 has respective terminals connected to both ends of the battery cell 11 and the battery cell 12, and regulates by discharging cell balancing current corresponding to the voltage difference between the battery cell 11 and the battery cell 12. This cell balancing circuit 100 includes a differential voltage-to-current converter 101, a differential voltage-to-current converter 102, and a voltage divider circuit 103. Also, the cell balancing circuit 100 includes a terminal VDD, a terminal VSS, a terminal VC1, a terminal VC2, a terminal CB1, and a terminal CB2.

The terminal VDD is a power supply terminal of the cell balancing circuit 100, and is connected to the positive electrode of the battery cell 11.

The terminal VSS is a GND terminal of the cell balancing circuit 100, and is connected to the negative electrode of the battery cell 12.

The voltage divider circuit 103 outputs a voltage divider voltage obtained by dividing the voltage applied to both ends.

The voltage divider circuit 103 has a resistor 103a and a resistor 103b connected in series. The resistor 103a and the resistor 103b have the same resistance value. This voltage divider circuit 103 has one end connected to the terminal VC1 and the other end grounded.

The terminal VC1 is connected to the positive electrode of the battery cell 11 via a resistor R1a. Also, one end of a capacitor C1 is connected to the terminal VC1, and the other end of the capacitor C1 is grounded.

The terminal VC2 is connected between the negative electrode of the battery cell 11 and the positive electrode of the battery cell 12 via a resistor R2a. Also, one end of a capacitor C2 is connected to the terminal VC2, and the other end of the capacitor C2 is grounded.

The resistor R1a and the resistor R2a have the same resistance value.

Thus, the resistor 103a and the resistor 103b have the same resistance value, and the resistor R1a and the resistor R2a respectively connected from the terminal VC1 and the terminal VC2 to the positive electrode and the negative electrode of the battery cell 11 have the same resistance value. From this, the voltage divider circuit 103 outputs a voltage divider voltage Vd1 as an average voltage of the cell voltage V1 and the cell voltage V2.

The voltage divider circuit 103 may be referred to as a "first voltage divider circuit", and the voltage divider voltage Vd1 may be referred to as a "first voltage divider voltage".

The differential voltage-to-current converter 101 outputs a current corresponding to a difference between voltages respectively input to a non-inverting input terminal and an inverting input terminal from an output terminal.

The differential voltage-to-current converter 101 has a non-inverting input terminal connected to an output terminal of the voltage divider circuit 103, and an inverting input terminal connected to the terminal VC2. Also, the differential voltage-to-current converter 101 has an input terminal connected to the terminal CB1, and an output terminal connected to the terminal CB2.

The terminal CB1 is connected to the positive electrode of the battery cell 11 via a resistor R1b, and is connected to one end of the differential voltage-to-current converter 101.

The terminal CB2 is connected between the negative electrode of the battery cell 11 and the positive electrode of the battery cell 12 via a resistor R2b, and is connected to the other end of the differential voltage-to-current converter 101.

Thus, this differential voltage-to-current converter 101 causes the battery cell 11 to discharge a cell balancing current Ib1 generated according to a voltage difference obtained by subtracting the cell voltage V2 from the voltage divider voltage Vd1.

The differential voltage-to-current converter 101 may be referred to as a "first differential voltage-to-current converter", and the cell balancing current Ib1 may be referred to as a "first cell balancing current".

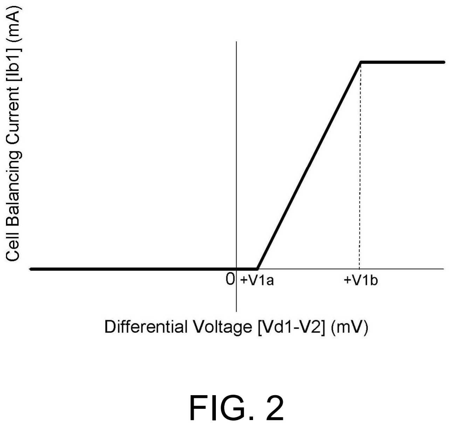

FIG. 2 is a graph illustrating cell balancing current-voltage difference characteristics of a differential voltage-to-current converter according to the first embodiment of the present invention. This FIG. 2 illustrates the cell balancing current-voltage difference characteristics of the differential voltage-to-current converter 101 with a solid line. In this graph, the vertical axis illustrates the cell balancing current Ib1, and the horizontal axis illustrates the voltage difference (Vd1-V2) obtained by subtracting the cell voltage V2 from the voltage divider voltage Vd1.

As illustrated in FIG. 2, the differential voltage-to-current converter 101 does not discharge the cell balancing current Ib1 in the case of the voltage difference (Vd1-V2) being less than +V1a. The differential voltage-to-current converter 101 increases the cell balancing current Ib1 as this voltage difference becomes larger in the case of the voltage difference (Vd1-V2) being equal to or higher than + V1a and equal to or lower than +V1b, and makes the cell balancing current Ib1 constant in a range where the voltage difference is larger than +V1b.

Returning to FIG. 1, the differential voltage-to-current converter 102, similar to the differential voltage-to-current converter 101, outputs a current from an output terminal corresponding to a difference between voltages respectively input to a non-inverting input terminal and an inverting input terminal.

The differential voltage-to-current converter 102 has a non-inverting input terminal connected to the terminal VC2, and an inverting input terminal connected to an output terminal of the voltage divider circuit 103. The differential voltage-to-current converter 102 has an input terminal connected to the terminal CB2, and an output terminal connected to the terminal VSS.

Thus, this differential voltage-to-current converter 102 causes the battery cell 12 to discharge a cell balancing current Ib2 generated according to a voltage difference obtained by subtracting the voltage divider voltage Vd1 from the cell voltage V2. In other words, the differential voltage-to-current converter 102 causes the battery cell 12 to discharge a cell balancing current Ib2 generated according to a voltage difference obtained by reversing the polarity of the voltage difference input to the non-inverting input terminal and the inverting input terminal of the differential voltage-to-current converter 101.

The differential voltage-to-current converter 102 may be referred to as a "second differential voltage-to-current converter", and the cell balancing current Ib2 may be referred to as a "second cell balancing current".

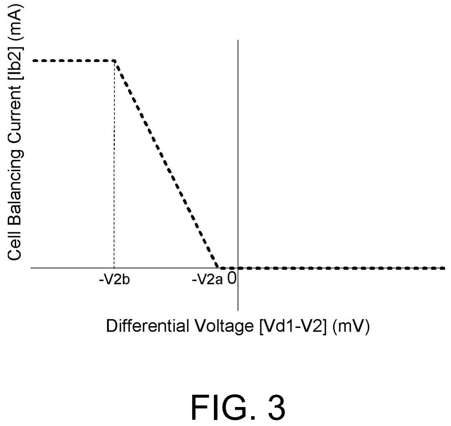

FIG. 3 is a graph illustrating cell balancing current-voltage difference characteristics of the differential voltage-to-current converter according to the first embodiment of the present invention. This FIG. 3 illustrates the cell balancing current-voltage difference characteristics of the differential voltage-to-current converter 102 with a dashed line. In this graph, the vertical axis illustrates the cell balancing current Ib2, and the horizontal axis illustrates the voltage difference (Vd1-V2) obtained by subtracting the voltage divider voltage Vd1 from the cell voltage V2.

As illustrated in FIG. 3, the differential voltage-to-current converter 102 makes the cell balancing current Ib2 constant in the case of the voltage difference (Vd1-V2) being less than -V2b. The differential voltage-to-current converter 102 decreases the cell balancing current Ib2 as this voltage difference becomes larger in the case of the voltage difference (Vd1-V2) being equal to or higher than -V2b and equal to or lower than -V2a, and does not discharge the cell balancing current Ib2 in the case of this voltage difference being larger than -V2a.

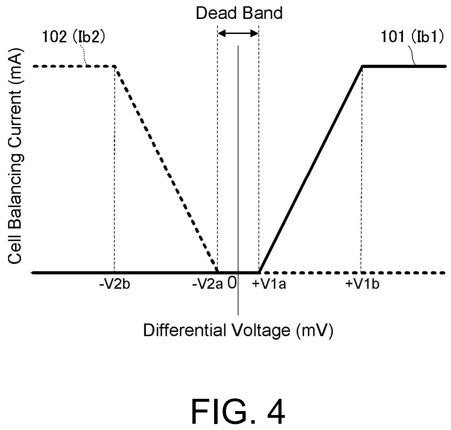

FIG. 4 is a graph illustrating cell balancing current-voltage difference characteristics of the differential voltage-to-current converter according to the first embodiment of the present invention. This FIG. 4 illustrates the cell balancing current-voltage difference characteristics of the differential voltage-to-current converter 101 and the differential voltage-to-current converter 102 illustrated in FIG. 2 and FIG. 3 in the same graph.

As illustrated in FIG. 4, in the cell balancing current-voltage difference characteristics, a dead band is provided in a range where the voltage difference is equal to or higher than -V2a and equal to or lower than +V1a. This dead band is an insensitive zone where the differential voltage-to-current converters 101, 102 do not discharge the cell balancing currents Ib1, Ib2 in the case of the voltage difference being a minute voltage difference close to 0.

This makes it possible to avoid unstable operation where the differential voltage-to-current converters 101, 102 discharge the cell balancing current Ib2 immediately after discharging the cell balancing current Ib1.

In the combination of the differential voltage-to-current converters 101, 102, the cell balancing currents Ib1, Ib2 are not discharged simultaneously. Thus, loss due to the cell balancing current Ib1 and the cell balancing current Ib2 canceling each other near the terminal CB2 does not occur, and this risk is further reduced by the dead band.

Also, the differential voltage-to-current converters 101, 102 provide an upper limit value such that the cell balancing currents Ib1, Ib2 become constant in a range where an absolute value of the voltage difference (Vd1-V2) is larger than a predetermined value.

This makes it possible to perform rated operation by preventing discharge of excessive cell balancing current and to suppress heat generation to a low level.

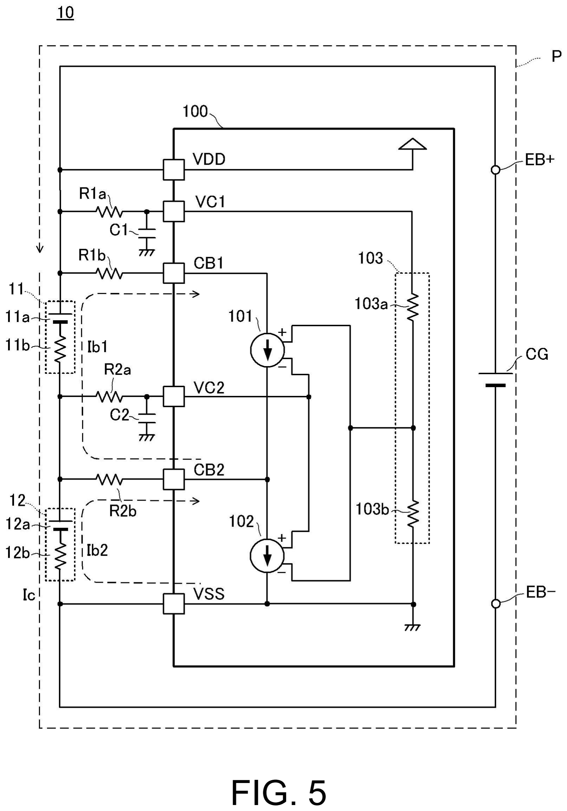

FIG. 5 is a circuit diagram illustrating a battery device (during charging) using a cell balancing circuit according to the first embodiment of the present invention.

As illustrated in FIG. 5, during charging, a charger CG is connected between the external positive terminal EB+ and the external negative terminal EB-.

In the battery device 10 during charging, the charger CG charges the battery cell 11 and the battery cell 12 connected in series. A charge current Ic flows in the main current path P to which the battery cells 11, 12 and the charger CG are connected.

The cell balancing circuit 100 performs cell balancing operation by discharging the cell balancing current Ib1 or the cell balancing current Ib2 through comparing the voltage divider voltage Vd1 and the cell voltage V2 even during charging.

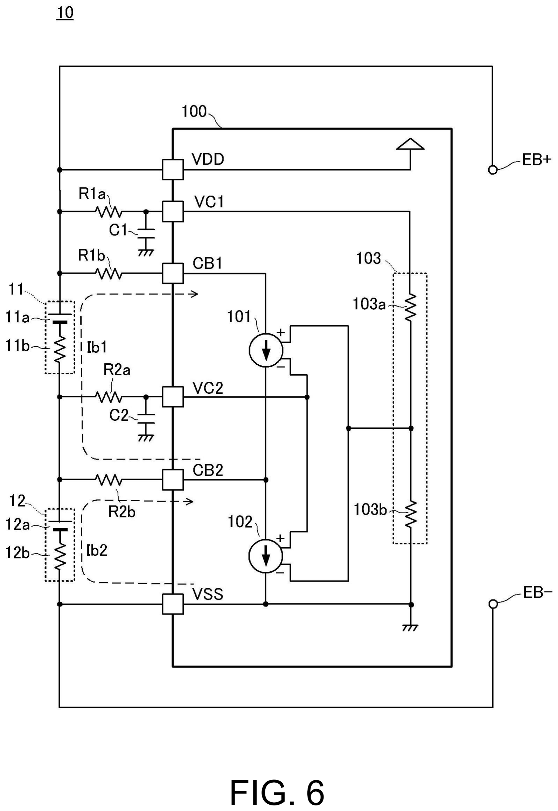

FIG. 6 is a circuit diagram illustrating a battery device (during open circuit) using a cell balancing circuit according to the first embodiment of the present invention.

As illustrated in FIG. 6, during open circuit, nothing is connected between the external positive terminal EB+ and the external negative terminal EB-. Thus, no current flows in the main current path P to which the battery cells 11, 12 are connected.

The cell balancing circuit 100 performs cell balancing operation by discharging the cell balancing current Ib1 or the cell balancing current Ib2 from the battery cells 11, 12 through comparing the voltage divider voltage Vd1 and the cell voltage V2 even during open circuit.

In this way, the cell balancing circuit 100 compares the average voltage of the cell voltage V1 and the cell voltage V2 with the cell voltage V2, and discharges the cell balancing current from the battery cell 11 or the battery cell 12 according to the voltage difference, regardless of during charging, during discharging, or during open circuit.

Thereby, the cell balancing circuit 100 may perform cell balancing operation for each battery cell by current control regardless of during charging, during discharging, or during open circuit. Also, since the cell balancing circuit 100 continuously performs cell balancing operation during long-term use, the degradation state becomes less likely to differ for each battery cell, so there is no need to discharge a large cell balancing current, and the service life of the battery pack can be extended.

(Second Embodiment)

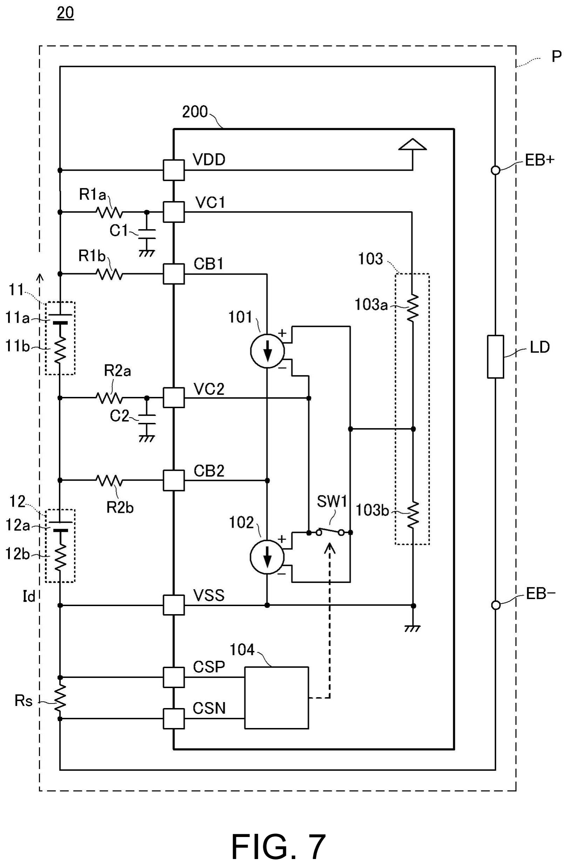

FIG. 7 is a circuit diagram illustrating a battery device (during discharging) using a cell balancing circuit according to a second embodiment of the present invention.

As illustrated in FIG. 7, a cell balancing circuit 200 in the second embodiment is similar to the cell balancing circuit 100 except that it further includes a current monitoring circuit 104 and a switching element SW1 in addition to the cell balancing circuit 100 of the first embodiment. Also, a battery device 20 in the second embodiment is similar to the battery device 10 except that it further includes a current sense resistor Rs in addition to the battery device 10 of the first embodiment.

Here, the current sense resistor Rs, the current monitoring circuit 104, and the switching element SW1, which are additional configurations compared to the first embodiment, will be described.

The current sense resistor Rs has one end connected to the negative electrode of the battery cell 12 and the other end connected to the external negative terminal EB-.

The current monitoring circuit 104 is connected to both ends of the current sense resistor Rs via terminals CSP and CSN, and determines whether the battery device 20 is in a discharging state, a charging state, or an open-circuited state by monitoring the current value flowing through the current sense resistor Rs, that is, the current value flowing through the main current path P.

The current monitoring circuit 104 turns on the switching element SW1 in response to determining a discharging state, and short-circuits the non-inverting input terminals and the inverting input terminals of the differential voltage-to-current converters 101, 102 to prevent voltage difference from being generated, thereby stopping the cell balancing operation.

The switching element SW1 is turned on/off by a signal output from the current monitoring circuit 104. The switching element SW1 short-circuits such that no voltage difference occurs between the non-inverting input terminals and inverting input terminals of the differential voltage-to-current converters 101, 102 in response to being turned on, and opens in response to being turned off.

In this way, the cell balancing circuit 200 is capable of maintaining the capacity of the entire battery pack without wastefully reducing the battery capacity of healthy battery cells by turning on the switching element SW1 to stop the cell balancing operation in response to the current monitoring circuit 104 determining a discharging state.

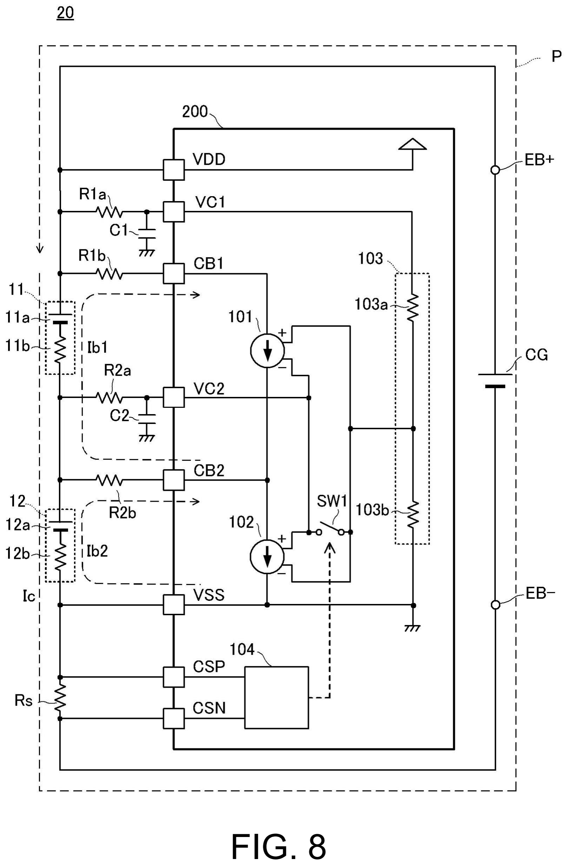

FIG. 8 is a circuit diagram illustrating a battery device (during charging) using a cell balancing circuit according to the second embodiment of the present invention.

As illustrated in FIG. 8, during charging, a charger CG is connected between the external positive terminal EB+ and the external negative terminal EB-. The charge current Ic flows through the main current path P to which the battery cells 11, 12 and the charger CG are connected, and the current monitoring circuit 104 turns off the switching element SW1 in response to determining a charging state. Then, the cell balancing circuit 200 performs the cell balancing operation by discharging the cell balancing current Ib1 or the cell balancing current Ib2 by comparing the voltage divider voltage Vd1 and the cell voltage V2.

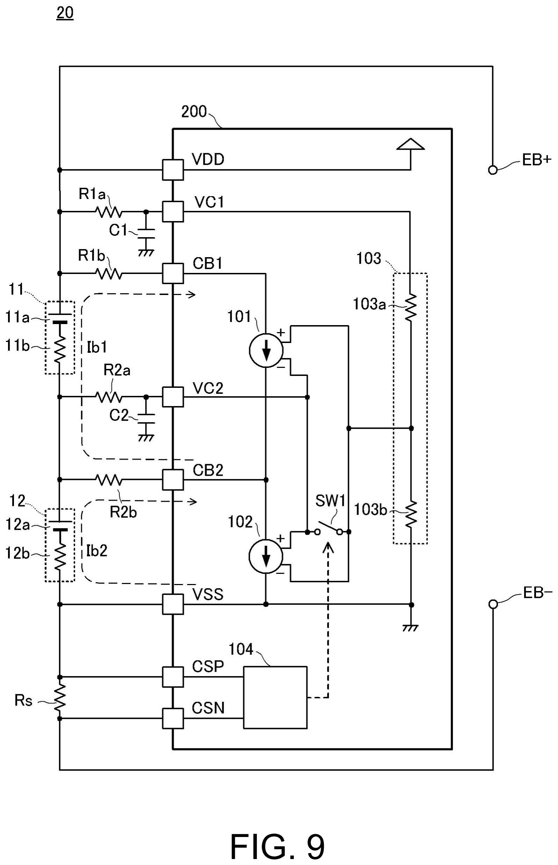

FIG. 9 is a circuit diagram illustrating a battery device (during open circuit) using a cell balancing circuit according to the second embodiment of the present invention.

As illustrated in FIG. 9, in response to determining that nothing is connected between the external positive terminal EB+ and the external negative terminal EB- and no current is flowing, the current monitoring circuit 104 turns off the switching element SW1. Then, the cell balancing circuit 200 performs the cell balancing operation by discharging the cell balancing current Ib1 or the cell balancing current Ib2 by comparing the voltage divider voltage Vd1 and the cell voltage V2.

In this way, the cell balancing circuit 200 is capable of maintaining the capacity of the entire battery pack without wastefully reducing the battery capacity of healthy battery cells by turning on the switching element SW1 to prevent the cell balancing operation from being performed in response to the current monitoring circuit 104 determining a discharging state.


(Third Embodiment)

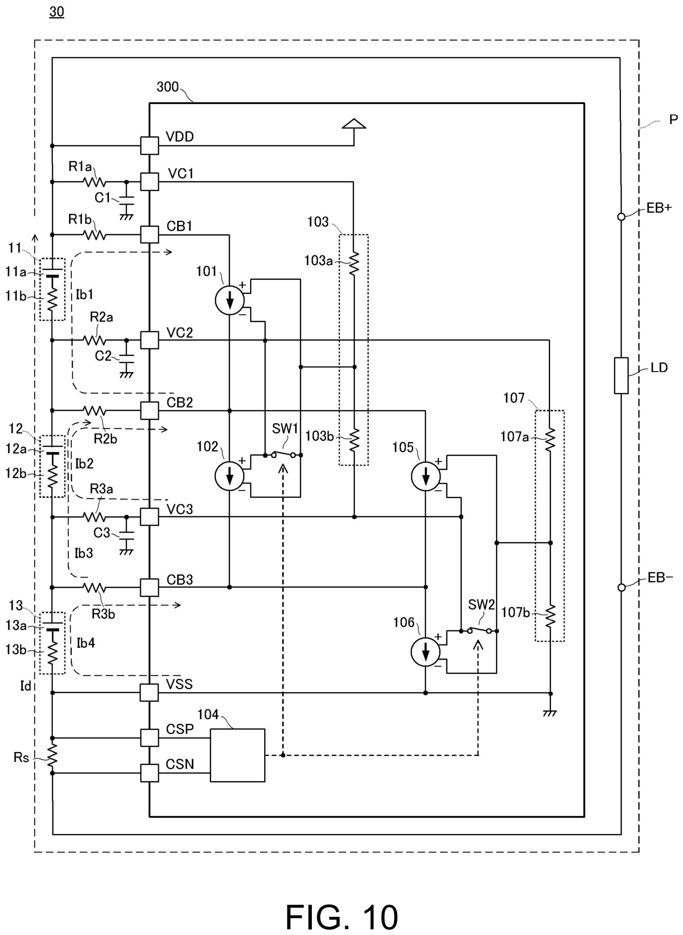

FIG. 10 is a circuit diagram illustrating a battery device 30 (during discharging) using a cell balancing circuit according to a third embodiment of the present invention.

As illustrated in FIG. 10, a cell balancing circuit 300 of the third embodiment is similar to the cell balancing circuit 200, except that the cell balancing circuit 300 further includes a battery cell 13, a voltage divider circuit 107, differential voltage-to-current converters 105, 106, and a switching element SW2 in addition to the cell balancing circuit 200.

Here, the battery cell 13, the voltage divider circuit 107, and the differential voltage-to-current converters 105, 106, which are additional configurations compared to the second embodiment, will be described.

The battery cell 13 is a lithium-ion battery, similar to the battery cell 11 and the battery cell 12. This battery cell 13 is connected in series with the battery cell 11 and the battery cell 12 in the main current path P, and generates a cell voltage V3 depending on the charge-discharge state and degradation state. Also, the battery cell 13 is formed by a battery 13a and an internal resistance 13b.

The battery 13a generates a predetermined open circuit voltage depending on the charge-discharge state. The internal resistance 13b includes solution resistance, charge transfer resistance, active material bulk resistance, contact resistance, and the like, and the resistance value increases as degradation progresses.

The voltage divider circuit 107, similar to the voltage divider circuit 103, outputs a voltage divider voltage obtained by dividing the voltage applied to both ends.

The voltage divider circuit 107 has a resistor 107a and a resistor 107b connected in series. The resistor 107a and the resistor 107b have the same resistance value. This voltage divider circuit 107 has one end connected to the terminal VC2 and the other end grounded.

The resistor R3a has the same resistance value as the resistor R1a and the resistor R2a.

Thus, since the resistor 107a and the resistor 107b have the same resistance value, the voltage divider circuit 107 outputs a voltage divider voltage Vd2 that is an average voltage of the cell voltage V2 and the cell voltage V3.

The voltage divider circuit 107 may be referred to as a "second voltage divider circuit," and the voltage divider voltage Vd2 may be referred to as a "second voltage divider voltage. "

The differential voltage-to-current converter 105, similar to the differential voltage-to-current converter 101, outputs from an output terminal a current corresponding to the difference between voltages respectively input to a non-inverting input terminal and an inverting input terminal.

The differential voltage-to-current converter 105 has a non-inverting input terminal connected to an output terminal of the voltage divider circuit 107 and an inverting input terminal connected to the terminal VC3. Also, the differential voltage-to-current converter 105 has an input terminal connected to the terminal CB2 and an output terminal connected to the terminal CB3.

The terminal VC3 is connected between a negative electrode of the battery cell 12 and a positive electrode of the battery cell 13 via a resistor R3a. Also, one end of a capacitor C3 is connected to the terminal VC3, and the other end of the capacitor C3 is grounded.

The terminal CB3 is connected between a negative electrode of the battery cell 12 and a positive electrode of the battery cell 13 via a resistor R3b, and is connected to the other end of the differential voltage-to-current converter 105.

Thus, this differential voltage-to-current converter 105 causes a cell balancing current Ib3, generated according to a voltage difference obtained by subtracting the cell voltage V3 from the voltage divider voltage Vd2, to be discharged from the battery cell 12.

The differential voltage-to-current converter 105 may be referred to as a "third differential voltage-to-current converter," and the cell balancing current Ib3 may be referred to as a "third cell balancing current."

The differential voltage-to-current converter 106, similar to the differential voltage-to-current converter 102, outputs from an output terminal a current corresponding to the difference between voltages respectively input to a non-inverting input terminal and an inverting input terminal.

The differential voltage-to-current converter 106 has a non-inverting input terminal connected to the terminal VC3 and an inverting input terminal connected to an output terminal of the voltage divider circuit 107. Also, the differential voltage-to-current converter 106 has an input terminal connected to the terminal CB3 and an output terminal connected to the terminal VSS.

Thus, this differential voltage-to-current converter 106 causes a cell balancing current Ib4, generated according to a voltage difference obtained by subtracting the voltage divider voltage Vd2 from the cell voltage V3, to be discharged from the battery cell 12.

The differential voltage-to-current converter 106 may be referred to as a "fourth differential voltage-to-current converter," and the cell balancing current Ib4 may be referred to as a "fourth cell balancing current."

The switching element SW2, similar to the switching element SW1, is turned on/off by a signal output from the current monitoring circuit 104. This switching element SW2 short-circuits such that no voltage difference occurs between the non-inverting input terminal and the inverting input terminal of the differential voltage-to-current converters 105 and 106 in response to being turned on, and opens in response to being turned off.

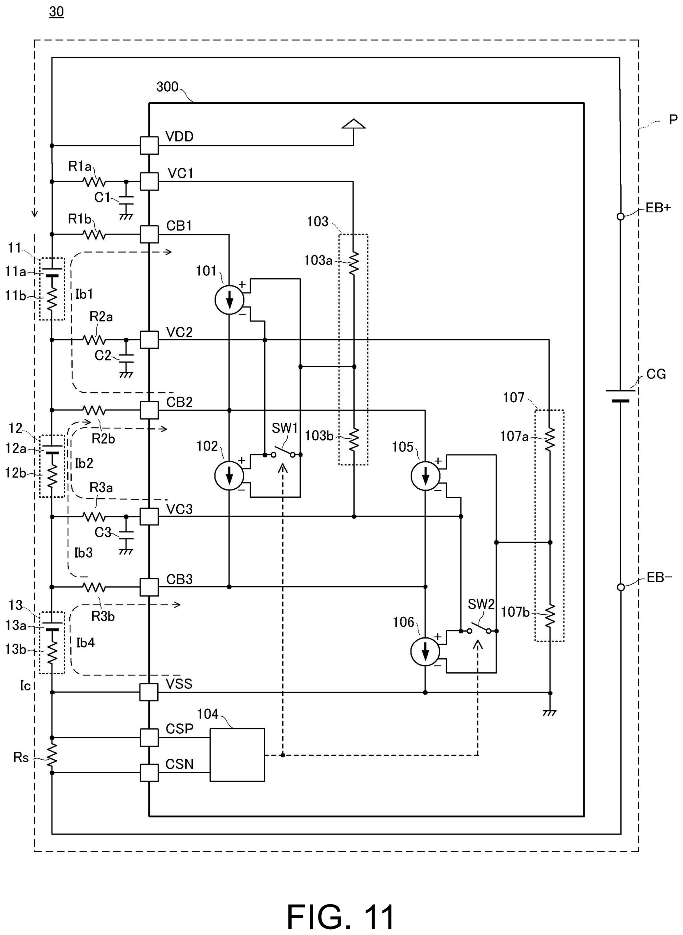

FIG. 11 is a circuit diagram illustrating a battery device (during charging) using a cell balancing circuit according to the third embodiment of the present invention.

As illustrated in FIG. 11, during charging, a charger CG is connected between the external positive terminal EB+ and the external negative terminal EB-. A charge current Ic flows in the main current path P to which the battery cells 11, 12, 13 and the charger CG are connected, and the current monitoring circuit 104 turns off the switching elements SW1 and SW2 in response to determining a charging state. Then, the cell balancing circuit 300 compares the voltage divider voltage Vd1 with the cell voltage V2 and compares the voltage divider voltage Vd2 with the cell voltage V3. Based on this comparison result, the cell balancing circuit 300 performs a cell balancing operation by discharging the cell balancing current Ib1 or the cell balancing current Ib2, and the cell balancing current Ib3 or the cell balancing current Ib4.

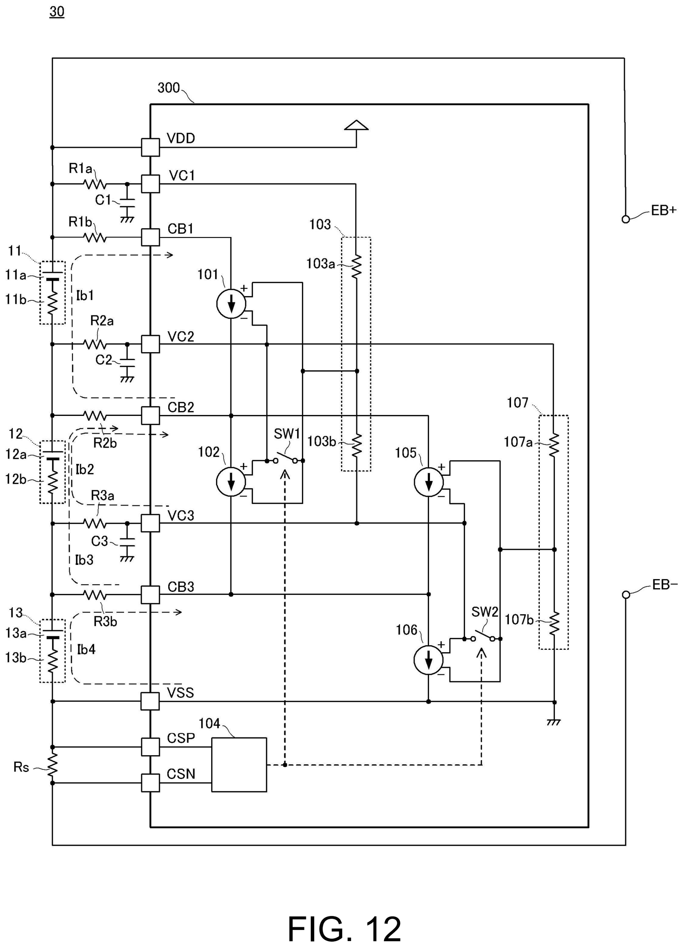

FIG. 12 is a circuit diagram illustrating a battery device (during open circuit) using a cell balancing circuit according to the third embodiment of the present invention.

As illustrated in FIG. 12, in response to determining that nothing is connected between the external positive terminal EB+ and the external negative terminal EB- and no current is flowing, the current monitoring circuit 104 turns off the switching element SW1. Then, the cell balancing circuit 300 compares the voltage divider voltage Vd1 with the cell voltage V2 and compares the voltage divider voltage Vd2 with the cell voltage V3. Based on this comparison result, the cell balancing circuit 300 performs a cell balancing operation by discharging the cell balancing current Ib1 or the cell balancing current Ib2, and the cell balancing current Ib3 or the cell balancing current Ib4.

In this way, even in the case of three battery cells, the cell balancing circuit 300 may compare the battery voltages of respective adjacent battery cells and discharge cell balancing currents from the battery cells 11, 12, 13 according to the voltage difference. In the battery cell 12, the cell balancing current Ib2 and the cell balancing current Ib3 are added.

Also, similar to the cell balancing circuit 200, the cell balancing circuit 300 turns on the switching element SW1 in response to the current monitoring circuit 104 determining a discharging state so as not to perform cell balancing operation, and is capable of maintaining the capacity of the entire battery pack without wastefully reducing the battery capacity of healthy battery cells.

Moreover, although the cell balancing circuit 300 performed cell balancing operation for three battery cells, cell balancing operation may also be performed for four or more battery cells by adding additional configurations compared to the second embodiment as the number of battery cells increases.

(Fourth Embodiment)

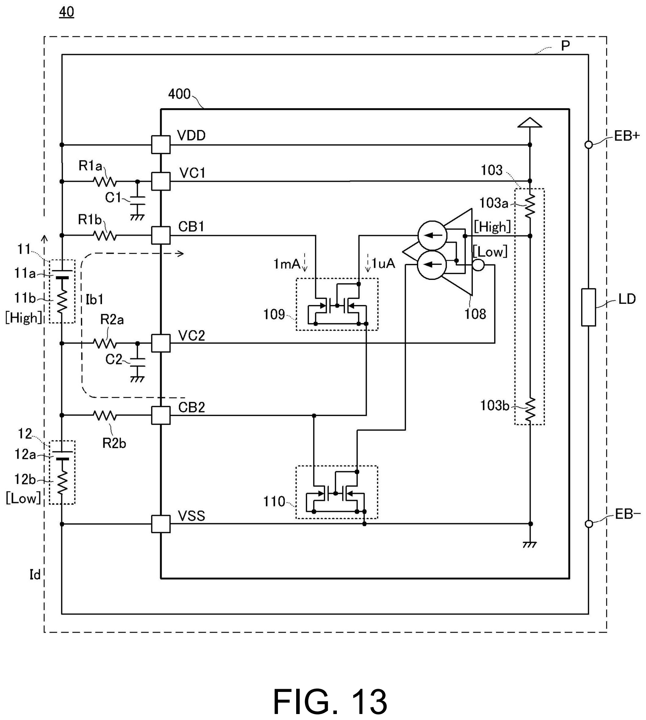

FIG. 13 is a circuit diagram illustrating a battery device 40 (during discharging) using a cell balancing circuit according to a fourth embodiment of the present invention.

A cell balancing circuit 400 of the fourth embodiment is similar to the cell balancing circuit 100, except that it has a differential voltage-to-current converter 108 and current mirror circuits 109, 110 instead of the differential voltage-to-current converters 101, 102 in the cell balancing circuit 100.

Here, the differential voltage-to-current converter 108 and the current mirror circuits 109, 110, which are configurations replacing the differential voltage-to-current converters 101, 102 of the first embodiment, will be described.

The differential voltage-to-current converter 108 outputs currents corresponding to the difference between voltages respectively input to the non-inverting input terminal and the inverting input terminal from two output terminals.

The differential voltage-to-current converter 108 has its non-inverting input terminal connected to the output terminal of the voltage divider circuit 103, and its inverting input terminal connected to terminal VC2. Also, one output terminal of the differential voltage-to-current converter 108 is connected to a current mirror circuit 109, and another output terminal is connected to a current mirror circuit 110.

The current mirror circuit 109 discharges a cell balancing current Ib1 corresponding to the current generated from one output terminal of the differential voltage-to-current converter 108 from the battery cell 11.

The current mirror circuit 110 discharges a cell balancing current Ib2 corresponding to the current generated from another output terminal of the differential voltage-to-current converter 108 from the battery cell 12.

The current mirror circuit 109 may be referred to as the "first current mirror circuit", and the current mirror circuit 110 may be referred to as the "second current mirror circuit".

Thus, this differential voltage-to-current converter 108 generates supply current according to the voltage difference obtained by subtracting the cell voltage V2 from the voltage divider voltage Vd1, and the current mirror circuits 109, 110 discharge the cell balancing currents Ib1, Ib2 corresponding to the supply current from the battery cells 11, 12.

Specifically, consider a case where an amplification factor of the current mirror circuit 109 is 1,000 times, and the battery cell 11 has a higher battery voltage than the battery cell 12. In this case, as illustrated in FIG. 13, by flowing a supply current of 1 $\mu$A from the differential voltage-to-current converter 108 to the current mirror circuit 109, a cell balancing current Ib1 of 1 mA is discharged from the battery cell 11 by the current mirror circuit 109.

Thereby, the cell balancing circuit 400 of the fourth embodiment may have equivalent function to the cell balancing circuit 100 of the first embodiment, and may discharge a larger cell balancing current.

(Fifth Embodiment)

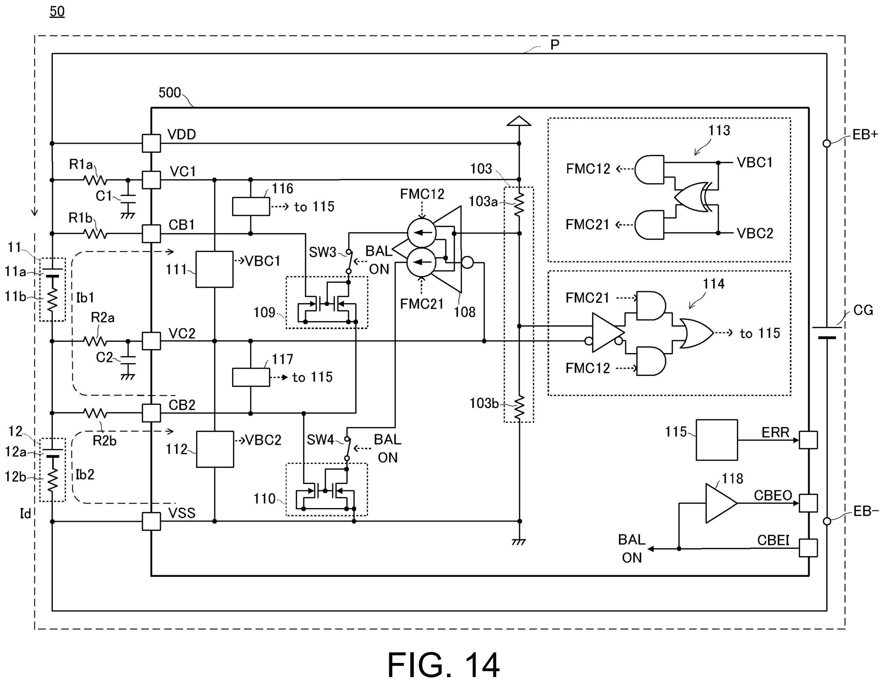

FIG. 14 is a circuit diagram illustrating a battery device 50 (during charging) using a cell balancing circuit according to a fifth embodiment of the present invention.

A cell balancing circuit 500 of the fifth embodiment further includes charge termination voltage detection parts 111, 112, logic circuits 113, 114, a diagnostic circuit 115, balance detection parts 116, 117, and a buffer 118 in the cell balancing circuit 400. The cell balancing circuit 500 is otherwise the same as the cell balancing circuit 400.

Here, the charge termination voltage detection parts 111, 112, the logic circuits 113, 114, the diagnostic circuit 115, the balance detection parts 116, 117, and the buffer 118, which are additional configurations compared to the fourth embodiment, will be described.

The charge termination voltage detection part 111 detects the charge termination voltage of the battery cell 11. A charge termination voltage refers to a voltage value determined for safe charging. The charge termination voltage detection part 111 has one end connected to terminal VC1 and the other end connected to terminal VC2. The charge termination voltage detection part 111 outputs a signal VBC1 to the logic circuit 113 in response to detecting that the charge voltage of the battery cell 11 has reached the charge termination voltage.

The charge termination voltage detection part 112 detects the charge termination voltage of the battery cell 12. The charge termination voltage detection part 112 has one end connected to terminal VC2 and the other end connected to terminal VSS. The charge termination voltage detection part 112 outputs a signal VBC2 to the logic circuit 113 in response to detecting that the charge voltage of the battery cell 12 has reached the charge termination voltage.

The logic circuit 113 outputs the results of logic operations based on the received signals VBC1 and VBC2 as a signal FMC12 and a signal FMC21 to the logic circuit 114 and the differential voltage-to-current converter 108, respectively.

Specifically, the logic circuit 113 performs logic operations to output the signal FMC12 and the signal FMC21 indicating that either one or both of the charge voltages of the battery cells 11, 12 have reached or have not reached the charge termination voltage.

Also, the differential voltage-to-current converter 108 has the supply of supply current to the current mirror circuits 109, 110 turned on/off according to the signals FMC12 and FMC21 received from the logic circuit 113.

Specifically, the differential voltage-to-current converter 108 discharges cell balancing currents Ib1, Ib2 corresponding to the voltage difference between the battery cell 11 and the battery cell 12 in the case of both charge voltages of the battery cells 11, 12 reaching the charge termination voltage. The differential voltage-to-current converter 108 also discharges cell balancing currents Ib1, Ib2 corresponding to the voltage difference between the battery cell 11 and the battery cell 12 in the case of both charge voltages of the battery cells 11, 12 not reaching the charge termination voltage. Also, the differential voltage-to-current converter 108 discharges the cell balancing current Ib1 of maximum output regardless of the voltage difference in the case of only the charge voltage of the battery cell 11 reaching the charge termination voltage. The differential voltage-to-current converter 108 discharges the cell balancing current Ib2 of maximum output in the case of only the charge voltage of the battery cell 12 reaching the charge termination voltage.

In this way, the cell balancing circuit 500, in addition to the functions of the cell balancing circuit 400, causes the differential voltage-to-current converter 108 to discharge the cell balancing current of maximum output in response to at least either one of the battery cells 11, 12 becoming equal to or higher than the charge termination voltage during charging.

In other words, the cell balancing circuit 500 discharges the cell balancing current Ib1 or the cell balancing current Ib2 of maximum output that is saturated in the graph illustrated in FIG. 4, and returns to the original state in response to both battery cells 11, 12 becoming equal to or higher than the charge termination voltage.

The logic circuit 114 outputs to the diagnostic circuit 115 the results of logic operations based on the two voltages input to the differential voltage-to-current converter 108 (voltage divider voltage Vd1 and voltage of terminal VC2), as well as the signal FMC12 and the signal FMC21 output by the logic circuit 113.

Specifically, the logic circuit 114 performs logic operations to determine two states: whether it is necessary to perform cell balancing operation, and whether the charge voltages of the battery cells 11, 12 have reached the charge termination voltage. The logic circuit 114 outputs the results of the logic operations to the diagnostic circuit 115.

The diagnostic circuit 115 outputs an error signal from a terminal ERR based on the results of the logic operations performed by the logic circuit 114.

Specifically, the diagnostic circuit 115 outputs an error signal from the terminal ERR in the case of the voltage difference between the battery cell 11 and the battery cell 12 being extremely large and the cells being in an unbalanced state.

Also, as will be described later, the diagnostic circuit 115 outputs an error signal from the terminal ERR based on signals output by the balance detection parts 116, 117. In other words, the diagnostic circuit 115 outputs an error signal to the outside in response to diagnosing that either the current mirror circuit 109 or the current mirror circuit 110 is abnormal based on the detection result of the balance detection part 116 and the detection result of a balance detection part 117.

The balance detection part 116 is connected between terminal VC1 and terminal CB1, and detects whether cell balancing operation is being performed. In other words, it compares the cell voltage of the battery cell 11 with the input voltage of the current mirror circuit 109, and detects the operating state of the current mirror circuit 109. Then, the balance detection part 116 outputs a signal to the diagnostic circuit 115 in response to detecting operation abnormality of the current mirror circuit 109.

The balance detection part 117 is connected between terminal VC2 and terminal CB2, and detects whether cell balancing operation is being performed. In other words, it compares the cell voltage of the battery cell 12 with the input voltage of the current mirror circuit 110, and detects the operating state of the current mirror circuit 110. Then, the balance detection part 117 outputs a signal to the diagnostic circuit 115 in response to detecting operation abnormality of the current mirror circuit 110.

The balance detection part 116 may be referred to as a "first balance detection part", and the balance detection part 117 may be referred to as a "second balance detection part".

The buffer 118 allows signals output from a terminal CBEO to another cell balancing circuit to pass through.

A switching element SW3 is connected between one output terminal of the differential voltage-to-current converter 108 and the current mirror circuit 109.

A switching element SW4 is connected between the other output terminal of the differential voltage-to-current converter 108 and the current mirror circuit 110.

In the case of the cell balancing circuit 500 cooperating with another cell balancing circuit, a signal from another cell balancing circuit is received by a terminal CBEI as an external signal input, and a signal is output from the terminal CBEO to another cell balancing circuit via the buffer 118. Specifically, in response to an OFF signal being received by the terminal CBEI from another cell balancing circuit, in the cell balancing circuit 500, the switching elements SW3 and SW4 turn off, and the cell balancing function stops. Moreover, the diagnostic circuit 115 outputs an error signal to the outside in response to any of the balance detection parts detecting a state where any of the current mirror circuits is discharging cell balancing current despite an OFF signal being received by the terminal CBEI from another cell balancing circuit.

Also, in response to an ON signal being received by the terminal CBEI from another cell balancing circuit, in the cell balancing circuit 500, the switching elements SW3 and SW4 turn on, and the cell balancing function operates.

The cell balancing circuit 500 may operate or stop the cell balancing function by turning on/off switching elements of another cell balancing circuit through the signal output from the terminal CBEO.

Next, two embodiment examples of the battery device of the present invention are illustrated.

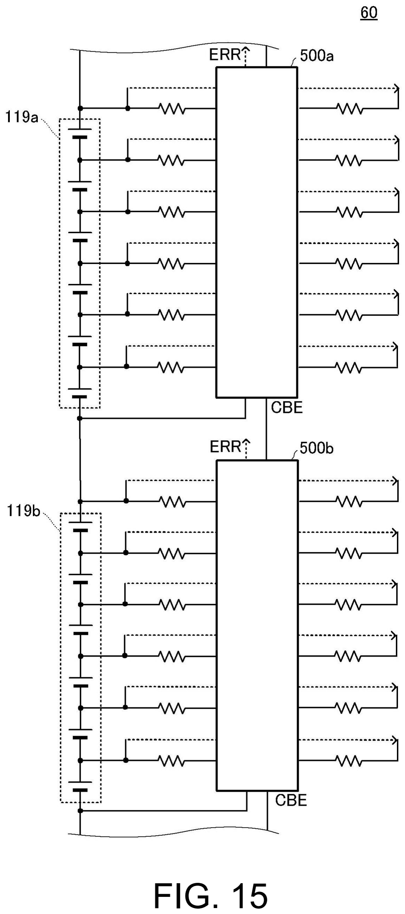

FIG. 15 is a schematic diagram illustrating an example of a battery device using multiple cell balancing circuits of FIG. 14.

As illustrated in FIG. 15, a battery device 60 is connected such that battery cells of battery cell groups 119a and 119b are respectively subjected to cell balancing operation by series-connected cell balancing circuits 500a and 500b. In the battery cell groups 119a and 119b, six battery cells are respectively connected in series.

Also, the cell balancing circuits 500a and 500b are connected by a terminal CBE (terminal CBEI + terminal CBEO) and may cooperate.

Thereby, the cell balancing circuits 500a and 500b may cooperate with simple wiring.

Moreover, since there is one differential voltage-to-current converters in the cell balancing circuits 500a and 500b in each of two adjacent battery cells, cell balancing current is not added for the topmost battery cell and the bottommost battery cell in the same battery cell group. Thus, the topmost battery cell and the bottommost battery cell of each battery cell group have a smaller amount of cell balancing current compared to other battery cells, and the time required for balancing becomes longer. This issue may be complemented by the differential voltage-to-current converter 108 illustrated in FIG. 13 and FIG. 14, which discharges of maximum output from a battery cell in response to any of the battery cells becoming equal to or higher than the charge termination voltage.

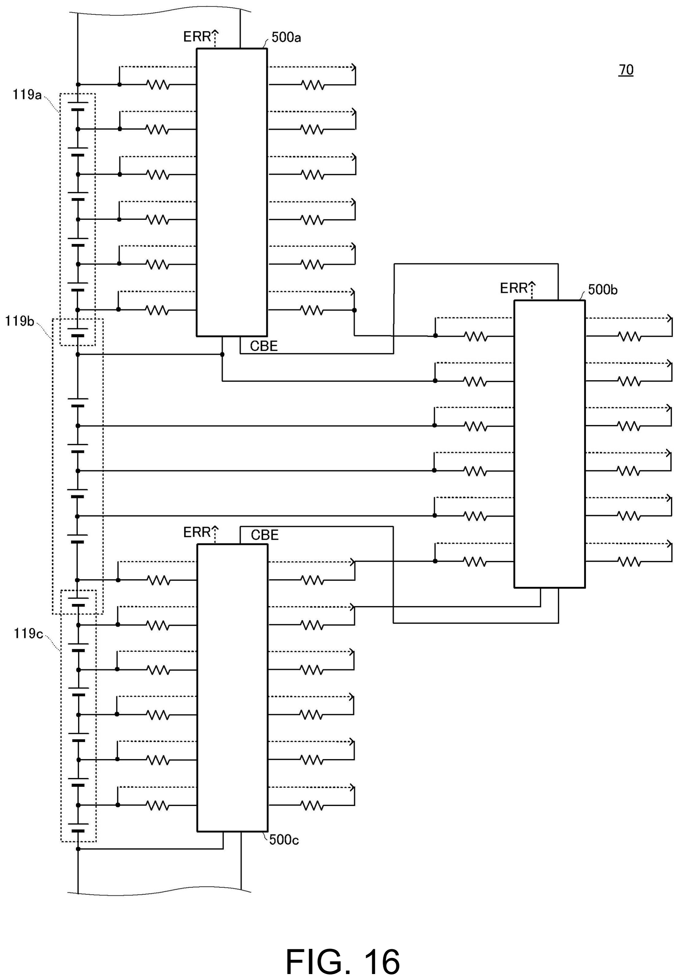

Also, by the connection method illustrated in FIG. 16, the time required for balancing may be equalized within the battery device.

FIG. 16 is a schematic diagram illustrating another example of a battery device using multiple cell balancing circuits of FIG. 14. FIG. 16 illustrates a battery device in the case where multiple battery cell groups form a battery pack. In a battery device 70 illustrated in FIG. 16, the bottommost battery cell of the battery cell group 119a (the upmost battery cell of the battery cell group 119b) is connected such that both the cell balancing circuit 500a and the cell balancing circuit 500b perform cell balancing operation. Furthermore, in the battery device 70, the bottommost battery cell of the battery cell group 119b (the upmost battery cell of a battery cell group 119c) is connected such that both the cell balancing circuit 500b and a cell balancing circuit 500c perform cell balancing operations.

By such connection, for example, in the bottommost battery cell of the battery cell group 119a, the cell balancing circuits 500a and 500b perform cell balancing operation, thereby current addition of cell balancing current is performed. Thereby, the battery device 70 is capable of equalizing the time required for balancing within the battery device.

As described above, the cell balancing circuit in one embodiment of the present invention has a first differential voltage-to-current converter that discharges from a first battery cell a first cell balancing current generated according to a voltage difference obtained by subtracting a second cell voltage from a first voltage divider voltage. Furthermore, this cell balancing circuit further has a second differential voltage-to-current converter that discharges from a second battery cell a second cell balancing current generated according to a voltage difference obtained by subtracting a first voltage divider voltage from a second cell voltage.

Thereby, cell balancing operation may be performed by current control for each battery cell connected in series.

Moreover, although the battery cell is a lithium-ion battery in each embodiment, the present invention is not limited thereto and may be any rechargeable battery.

Also, in the second embodiment and the third embodiment, one end of the current sense resistor Rs is connected to the negative electrode of the battery cell 12 and the other end is connected to the external negative terminal EB-, but it is sufficient that the current monitoring circuit 104 may determine the state of the battery cell. Specifically, the current sense resistor Rs only needs to be connected in series to the main current path P.

Furthermore, in each embodiment, the voltage divider circuit outputs a voltage divider voltage that is an average voltage of two cell voltages, but the voltage divider voltage may be appropriately adjusted by changing the resistance value of the voltage divider resistor.

[Reference Signs List]

10, 20, 30, 40, 50, 60, 70 Battery device
11 Battery cell (first battery cell)
12 Battery cell (second battery cell)
13 Battery cell (third battery cell)
100, 200, 300, 400, 500 Cell balancing circuit
101 Differential voltage-to-current converter (first differential voltage-to-current converter)
102 Differential voltage-to-current converter (second differential voltage-to-current converter)
103 Voltage divider circuit (first voltage divider circuit)
104 Current monitoring circuit
105 Differential voltage-to-current converter (third differential voltage-to-current converter)
106 Differential voltage-to-current converter (fourth differential voltage-to-current converter)
107 Voltage divider circuit (second voltage divider circuit)
108 Differential voltage-to-current converter
109 Current mirror circuit (first current mirror circuit)
110 Current mirror circuit (second current mirror circuit)
111, 112 Charge termination voltage detection part
113, 114 Logic circuit
115 Diagnostic circuit
116 Balance detection part (first balance detection part)
117 Balance detection part (second balance detection part)
118 Buffer

119a, 119b Battery cell group
CG Charger
Ib1 Cell balancing current (first cell balancing current)
Ib2 Cell balancing current (second cell balancing current)
Ib3 Cell balancing current (third cell balancing current)
Ib4 Cell balancing current (fourth cell balancing current)
Ic Charge current
Id Discharge current
P Main current path
V1 Cell voltage (first cell voltage)
V2 Cell voltage (second cell voltage)
V3 Cell voltage (third cell voltage)
SW1, SW2, SW3, SW4 Switching element
LD Load

## Claims

1. A cell balancing circuit (100, 200, 300, 400, 500), controlling cell balancing between a first battery cell (11) that generates a first cell voltage (V1) and a second battery cell (12) which is connected in series with the first battery cell (11) and generates a second cell voltage (V2), the cell balancing circuit (100, 200, 300, 400, 500) comprising:

   a first voltage divider circuit (103) that outputs a first voltage divider voltage (Vd1) as an average voltage of the first battery cell (11) and the second battery cell (12);
   a first differential voltage-to-current converter (101) that discharges from the first battery cell (11) a first cell balancing current (Ib1) generated according to a voltage difference obtained by subtracting the second cell voltage (V2) from the first voltage divider voltage (Vd1); and
   a second differential voltage-to-current converter (102) that discharges from the second battery cell (12) a second cell balancing current (Ib2) generated according to the voltage difference with polarity reversed.

2. The cell balancing circuit (100, 200, 300, 400, 500) according to claim 1, wherein the first differential voltage-to-current converter (101) and the second differential voltage-to-current converter (102) do not discharge the first cell balancing current (Ib1) and the second cell balancing current (Ib2) in response to the voltage difference being within a predetermined range including 0.

3. The cell balancing circuit (100, 200, 300, 400, 500) according to claim 1, wherein the first differential voltage-to-current converter (101) and the second differential voltage-to-current converter (102) make the cell balancing current constant in a range where an absolute value of the voltage difference is larger than a predetermined value.

4. The cell balancing circuit (100, 200, 300, 400, 500) according to claim 1, further comprising:

   a current monitoring circuit (104) which is connected to both ends of a current sense resistor (Rs) connected in series to a main current path, monitors a current value flowing through the current sense resistor (Rs), and determines whether the first battery cell (11) and the second battery cell (12) are in a discharging state, a charging state, or an open-circuited state; and
   a switching element (SW1, SW2, SW3, SW4) that turns on/off according to a signal output from the current monitoring circuit (104), short-circuits such that the voltage difference does not occur in response to turning on, and does not short-circuit such that the voltage difference occurs in response to turning off,
   wherein the current monitoring circuit (104) turns on the switching element (SW1, SW2, SW3, SW4) in response to determining the discharging state, and turns off the switching element (SW1, SW2, SW3, SW4) in response to determining the charging state or the open-circuited state.

5. The cell balancing circuit (100, 200, 300, 400, 500) according to claim 1, further comprising:

   a first current mirror circuit (109) that discharges from the first battery cell (11) a current corresponding to a supply current from the first differential voltage-to-current converter (101) as the first cell balancing current (Ib1); and
   a second current mirror circuit (110) that discharges from the second battery cell (12) a current corresponding to a supply current from the second differential voltage-to-current converter (102) as the second cell balancing current (Ib2).

6. The cell balancing circuit (100, 200, 300, 400, 500) according to claim 5, further comprising:

a first balance detection part (116) that compares the first cell voltage (V1) and an input voltage of the first current mirror circuit (109) and detects an operating state of the first current mirror circuit (109);
a second balance detection part (117) that compares the second cell voltage (V2) and an input voltage of the second current mirror circuit (110) and detects an operating state of the second current mirror circuit (110); and
a diagnostic circuit (115) that outputs an error signal to outside in response to diagnosing that either the first current mirror circuit (109) or the second current mirror circuit (110) is abnormal based on a detection result of the first balance detection part (116) and a detection result of the second balance detection part (117).

7. The cell balancing circuit (100, 200, 300, 400, 500) according to claim 6, further comprising;

an external signal input terminal by which an OFF signal for stopping discharge of the first cell balancing current (Ib1) and the second cell balancing current (Ib2) is received,
wherein in a case that the OFF signal is received by the external signal input terminal,
the first balance detection part (116) and the second balance detection part (117) detect that the cell balancing current is being discharged, and
the diagnostic circuit (115) outputs the error signal to outside.

8. The cell balancing circuit (100, 200, 300, 400, 500) according to claim 1,
wherein in a case that a third battery cell (13) that generates a third cell voltage (V3) is connected in series to a negative electrode side of the second battery cell (12), the cell balancing circuit (100, 200, 300, 400, 500) further comprises:

a second voltage divider circuit (107) that outputs a second voltage divider voltage (Vd2) as an average voltage of the second battery cell (12) and the third battery cell (13);
a third differential voltage-to-current converter (105) that discharges from the second battery cell (12) a third cell balancing current (Ib3) generated according to a voltage difference obtained by subtracting the third cell voltage (V3) from the second voltage divider voltage (Vd2); and
a fourth differential voltage-to-current converter (106) that discharges from the third battery cell (13) a fourth cell balancing current (Ib4) generated according to the voltage difference with polarity reversed,
wherein the second cell balancing current (Ib2) and the third cell balancing current (Ib3) are added in the second battery cell (12).

9. A battery device, comprising at least:

a first battery cell (11) that generates a first cell voltage (V1);
a second battery cell (12) connected in series with the first battery cell (11) and generating a second cell voltage (V2); and
the cell balancing circuit (100, 200, 300, 400, 500) according to any one of claims 1 to 8.

FIG. 1

FIG. 2

FIG. 3

FIG. 4

FIG. 5

10

FIG. 6

FIG. 7

FIG. 8

FIG. 9

FIG. 10

FIG. 11

FIG. 12

FIG. 13

FIG. 14

EP 4 738 644 A1

FIG. 15

FIG. 16

# EUROPEAN SEARCH REPORT

**Application Number**

EP 25 20 7253

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/077875 A1 (BOHLEY THOMAS K [US]) 14 April 2005 (2005-04-14) | 1,2,8 | INV. H02J7/54 |
| Y | * paragraphs [0001], [0010], [0012], | 3 | B60L58/22 |
| A | [0013], [0014]; figures 1, 2 * ----- | 4-7,9 | ADD. |
| Y | CN 105 305 564 A (SHANGHAI INST SPACE POWER SOURCES) 3 February 2016 (2016-02-03) * figure 4 * ----- | 3 | H02J7/61 H02J7/64 |

**TECHNICAL FIELDS SEARCHED (IPC)**

H02J
B60L

The present search report has been drawn up for all claims

| Place of search | Date of completion of the search | Examiner |
|---|---|---|
| Munich | 3 February 2026 | Bocanegra Gallardo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 7253

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2026

| Patent document cited in search report | Publication date | Patent family member(s) | Publication date |
|---|---|---|---|
| US 2005077875 A1 | 14-04-2005 | NONE | |
| CN 105305564 A | 03-02-2016 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015029283 A
- JP 2000083327 A
- JP 2010063264 A